## Europäisches Patentamt

## European Patent Office

## Office européen des brevets

(19)

(11) Numéro de publication: **0 147 337**
**B1**

(12) # FASCICULE DE BREVET EUROPEEN

(45) Date de publication du fascicule du brevet:
**14.09.88**

(51) Int. Cl.⁴: **G 07 F 7/10,** G 06 K 19/06

(21) Numéro de dépôt: **84402764.9**

(22) Date de dépôt: **28.12.84**

(54) **Procédé et système pour traiter de façon confidentielle des informations stockées sur une piste d'enregistrement à lecture optique d'un support portatif.**

(30) Priorité: **30.12.83 FR 8321063**

(43) Date de publication de la demande:
**03.07.85 Bulletin 85/27**

(45) Mention de la délivrance du brevet:
**14.09.88 Bulletin 88/37**

(84) Etats contractants désignés:
**DE FR GB IT NL SE**

(56) Documents cités:
**EP - A - 0 029 894**
**EP - A - 0 030 381**
**EP - A - 0 138 219**
**FR - A - 2 337 381**
**FR - A - 2 417 141**
**FR - A - 2 496 294**
**FR - A - 2 536 928**
**GB - A - 2 069 201**
**US - A - 4 094 462**
**US - A - 4 360 728**

**IBM TECHNICAL DISCLOSURE BULLETIN, vol. 24, no. 6, novembre 1981, pages 2985-2986, New York, US; J. SVIGALS: "Embossed magnetic stripe media authentication method"**

(73) Titulaire: **BULL S.A., 121, avenue de Malakoff, F-75764 Paris Cédex 16 (FR)**

(72) Inventeur: **Girard, Paul Marie, 1, rue Isaac Albeniz, F-91440 Bures sur Yvette (FR)**

(74) Mandataire: **Debay, Yves et al, BULL S.A. Industrial Property Department 25 avenue de la Grande-Armée, F-75016 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne généralement des perfectionnements apportés à des supports portatifs tels que des cartes, et a plus particulièrement pour objet des procédés et des systèmes pour traiter de façon confidentielle des informations stockées sur une piste d'enregistrement à lecture optique d'un support portatif.

Les cartes à piste d'enregistrement magnétique sont très connues et largement utilisées dans de nombreuses applications, notamment grand public. Ces cartes ont cependant des possibilités limitées du fait qu'elles ne peuvent pas traiter elles-mêmes les informations qu'elles supportent passivement.

Pour augmenter les possibilités de ces cartes, on a fait appel à la technique des circuits intégrés en incluant dans ces cartes des circuits de traitement, notamment un microprocesseur, pour traiter en interne les informations et pour assurer des échanges d'informations avec un appareil d'exploitation auquel la carte est temporairement accouplée. Une telle carte est notamment décrite dans le brevet français FR-A-2 337 381 de la demanderesse. La carte inclut également une mémoire morte du type ROM ou PROM dans laquelle sont enregistrés ou préenregistrés des informations à traiter et des programmes qui pilotent le microprocesseur. Généralement, cette mémoire se substitue à la piste magnétique, mais la coexistence de ces deux types de mémoire est tout à fait possible et est d'ailleurs prévue dans FR-A-2 337 381.

Une carte à microprocesseur présente deux avantages importants. Le premier avantage est la possibilité d'un traitement interne par le microprocesseur et le deuxième avantage est une augmentation de la capacité de stockage offerte par la mémoire morte par rapport à une mémoire constituée par un morceau de bande magnétique.

Le développement des cartes, notamment des cartes de crédit, a nécessité le traitement confidentiel de certaines informations pour pallier les tentatives de fraude. Ce problème est résolu dans les cartes à microprocesseur, notamment dans le brevet français FR-A-2 417 141 ou FR-A-2 401 459 de la demanderesse où une mémoire morte contient au moins une zone inaccessible de l'extérieur en écriture/lecture, seul le microprocesseur ayant accès à cette zone contenant les informations confidentielles ou secrètes.

Compte tenu des coûts des microcircuits, la capacité des mémoires mortes utilisées reste limitée. En outre, il ne faut pas oublier qu'une partie importante de cette mémoire est utilisée pour stocker des programmes en plus des informations courantes spécifiques des applications envisagées, ce qui limite d'autant la place mémoire disponible pour la gestion courante.

Pour augmenter à faible coût la capacité de stockage d'une carte, il a été fait recours à des supports d'enregistrement optique. Si à l'évidence la capacité de stockage est considérablement augmentée, les informations enregistrées sur des pistes optiques sont à tout moment lisibles de l'extérieur, c'est-à-dire qu'elles ne peuvent conserver un quelconque caractère confidentiel vis-à-vis de toute personne en possession de la carte. Une telle carte est notamment décrite dans le brevet US-A-4 360 728.

L'invention vise à pallier cet inconvénient en envisageant une carte à piste optique pour augmenter la capacité de stockage et à microprocesseur pour traiter de façon confidentielle la totalité ou une partie seulement des informations à écrire sur la piste optique.

L'invention pour les Etats IT, NL, SE propose à cet effet des procédés et un système définis par les revendications 1, 2, et 5, version A.

Le document EP-A2- 0 138 219 cité au titre de l'article 54(3) CBE pour les Etats DE, FR, GB enseigne des procédés et des systèmes conformes à ceux définis par les revendications 1, 2, 5 et 6, version A, pour les Etats IT, NL, SE, à l'exclusion de l'utilisation dans ces procédés et systèmes d'une piste magnéto-optique.

L'invention pour les Etats DE, GB, FR propose des procédés et un système définis par les revendications 1, 2 et 5, version B, qui se distinguent de l'état de la technique suivant EP-A2-0 138 219 par l'utilisation d'une piste magnéto-optique.

Selon un avantage important de l'invention, les informations chiffrées enregistrées sur la piste optique restent confidentielles bien que lisibles de l'extérieur. Pour sauvegarder cette confidentialité il est indispensable que la clé de chiffrement reste secrète. Cette sauvegarde du secret de la clé de chiffrement est rendue possible par l'utilisation d'une zone de mémoire uniquement accessible par les circuits de traitement de la carte.

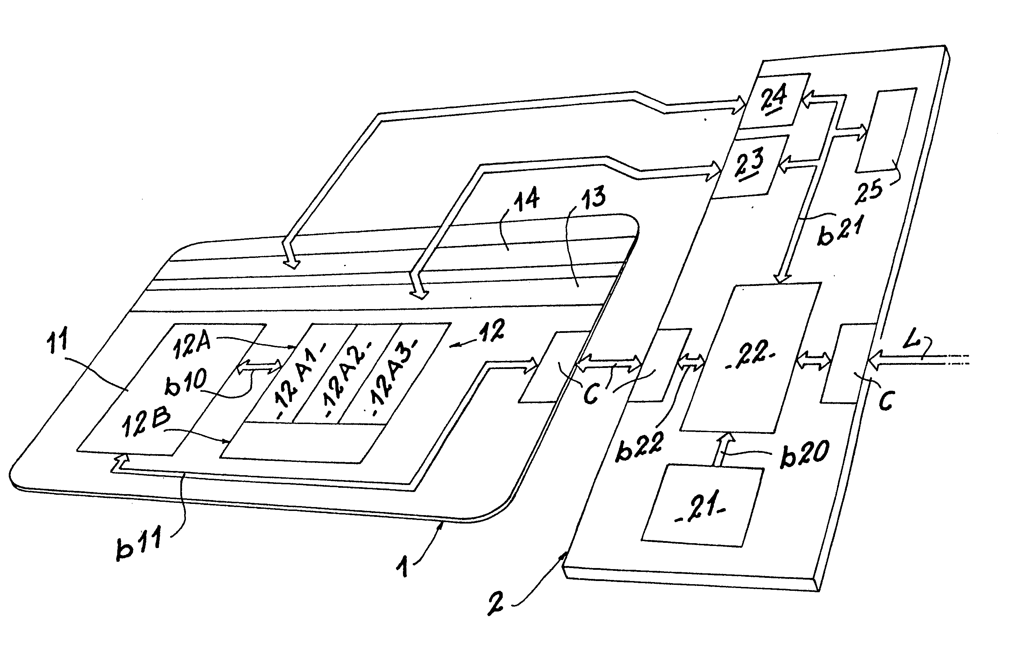

Le principe de l'invention est illustré par un système représenté de façon schématique en référence à la figure unique annexée.

Ce système est constitué par un objet portatif tel qu'une carte (1) accouplable temporairement à un terminal (2).

La carte (1) a par exemple une structure conforme à celle décrite dans le brevet français FR-A-2 461 301 de la demanderesse. Elle se compose essentiellement de circuits de traitement (11) tels qu'un microprocesseur et d'un ensemble mémoire (12).

Pour la mise en œuvre de l'invention, l'ensemble mémoire (12) comprend une mémoire non volatile (12A) et une mémoire volatile (12B). La mémoire (12A) est elle-même divisée en trois zones: une zone secrète (12A1) inaccessible de l'extérieur en écriture/lecture, une zone (12A2) accessible sous condition préalable, et une zone (12A3) accessible de l'extérieur en écriture/lecture.

Le microprocesseur (11) accède à l'ensemble mémoire (12) par l'intermédiare d'un bus (b10).

La carte possède une piste d'enregistrement à lecture optique (13) et éventuellement une piste magnétique (14).

Le terminal (2) comprend au moins:
– un dispositif d'entrée manuelle de données, comme par exemple un clavier (21),

– un dispositif (22) assurant au moins le transfert des informations entre la carte (1) et le terminal (2),

– un dispositif d'écriture-lecture (23) de la piste optique (13),

– un dispositif d'écriture-lecture magnétique (24) de la piste magnétique (14), et

– accessoirement une unité d'affichage (25).

Le dispositif (22) est relié:

– au clavier (21) par une liaison (b20), et

– aux dispositifs d'écriture/lecture (23, 24) et à l'unité d'affichage (25) par un bus (b21).

La carte (1) est temporairement accouplée au terminal (2) par une interface (C) par exemple série telle que décrite dans la demande de brevet français FR-A-2 483 713 de la demanderesse. Cette interface (C) est reliée au microprocesseur (11) par une liaison (b11) et au dispositif (22) par une liaison (b22).

Le terminal (2) peut être relié à un autre terminal (non représenté) par une ligne de transmission (L) classique.

Sous la dénomination «terminal», il faut entendre d'une façon générale tout appareillage qui est susceptible de traiter des données, de transférer des données et d'effectuer des opérations d'écriture/lecture sur un support quelconque tel qu'un support magnétique, optique, papier . . .

Soient des informations ou données (D) à écrire sur la piste optique (13) de la carte (1). Ces données (D), par exemple en clair, sont entrées au clavier (21) ou parviennent par la ligne de transmission (L).

Ces données sont reçues dans le dispositif de transfert (22) dont une fonction est de les acheminer dans la carte (1) en vue de leur stockage temporaire dans la zone de mémoire (12B) de la mémoire (12) de la carte (1). Il est possible, en fonction des applications envisagées, que ces données (D) soient préalablement traitées par le dispositif de transfert (22).

Des informations confidentielles ou secrètes sont préenregistrées dans la zone de mémoire secrète (12A1) de la carte (1). Ces informations sont constituées à titre d'exemple par:

– une clé de chiffrement (KC),

– un algorithme de chiffrement enregistré sous la forme d'un programme (P) pour chiffrer les données à partir de la clé (KC),

– un code secret (S) inconnu du détenteur de la carte, et

– un code d'identification (IN) (PIN-NUMBER en langue anglaise) connu du détenteur de la carte.

Les données (D) enregistrées dans la zone de mémoire (12B) de la carte (1) sont chiffrées suite à l'exécution du programme (P) par le microprocesseur (11). Ce programme (P) exécute le chiffrement des données (D) à partir de la clé de chiffrement (KC). Les données (D), une fois chiffrées, sont retransmises par le dispositif de transfert (22) du terminal (2), au dispositif d'écriture/lecture (23) dont la fonction est de les enregistrer sur la piste optique (13) de la carte (1) d'une façon connue en soi selon les techniques classiques.

Ces données chiffrées enregistrées sur la piste optique (13) sont lisibles par tout dispositif approprié, mais elles restent inexploitables dès l'instant où l'on ne connaît pas la clé qui a permis de chiffrer ces données.

Ces données seront d'autant plus inexploitables que la clé (KC) de chiffrement n'est pas accessible de l'extérieur puisque enregistrée dans la zone protégée (12A1) de la mémoire (12) de la carte (1).

En sens inverse, les données chiffrées enregistrées sur la piste optique (13) peuvent être lues par le dispositif (23). Les données lues sont ensuite à nouveau transmises dans la carte (1) pour être déchiffrées par les circuits de traitement (11) en utilisant une clé de déchiffrement par exemple identique à la clé de chiffrement (KC). Une fois les données déchiffrées par la carte (1), elles sont retransmises en clair au terminal (2) pour exploitation. Cette exploitation peut être un affichage sur l'unité (25) ou une transmission vers un autre terminal par l'intermédiaire de la ligne de transmission (L).

Comme indiqué précédemment, il est déjà connu un dispositif d'écriture/lecture optique à laser conformément au brevet US-A-4 360 728. Le matériau constituant la piste optique doit être thermo-sensible pour l'écriture et réflecteur pour la lecture.

L'invention prévoit une variante qui consiste à utiliser une piste magnéto-optique constituée par exemple par des grenats (Fe-TR) (TR: Terres Rares telles que Fe-GB, Fe-TB).

Ces pistes magnéto-optiques sont lues optiquement et elles se distinguent essentiellement des pistes à écriture optique par une écriture magnétique soit par laser, soit par un procédé magnétique classique.

Le mode d'écriture par laser est un mode d'écriture thermo-magnétique qui consiste à utiliser l'effet thermique dû à l'impact d'un faisceau de rayonnement électro-magnétique laser sur le matériau magnétique constituant la piste électro-optique. Ce rayonnement est tel que la surface de la piste magnéto-optique sur laquelle est concentré le faisceau laser subit un échauffement tel que la température de la couche magnétique en cet endroit devient supérieure à la température de Curie du matériau magnétique, température à partir de laquelle ce dernier perd son aimantation. Si l'on soumet cet endroit à un champ magnétique dont la direction est opposée à l'aimantation dans la couche magnétique lors du refroidissement du matériau magnétique (le faisceau laser étant supprimé), le matériau magnétique prendra alors une aimantation de sens opposé à l'aimantation du reste de la couche magnétique.

Un autre mode d'écriture magnétique utilisable peut être du type à enregistrement perpendiculaire.

Dans ces conditions, le dispositif d'écriture/lecture (23) peut être:

– un dispositif à lecture optique et à écriture optique par laser,

– un dispositif à lecture optique par laser et à écriture magnétique classique, notamment à enregistrement perpendiculaire, ou

– un dispositif à lecture optique et à écriture magnétique par laser.

Enfin, il faut préciser que le mode de lecture des informations enregistrées sur une couche magnéto-optique repose sur le principe d'interaction d'une lumière polarisée avec l'état magnétique de la couche, interaction qui a pour conséquence la rotation du vecteur champ électrique dans le plan perpendiculaire à la direction de propagation du faisceau laser.

Cette détection se fait soit par «effet Kerr», en utilisant un phénomène de réflexion, soit par «effet Faraday» où le faisceau laser traverse la couche magnéto-optique. De façon avantageuse, pour améliorer la lecture, on peut utiliser la combinaison des deux effets précités. Il n'est pas nécessaire de décrire plus en détail ces effets bien connus de l'homme de l'art.

Bien entendu, les algorithmes de chiffrement seront plus ou moins sophistiqués en fonction du degré de sécurité souhaité et la clé de déchiffrement n'est pas obligatoirement identique à la clé de chiffrement comme dans le cas des algorithmes à clé publique.

Le caractère secret de l'algorithme de chiffrement est fonction du type de l'algorithme choisi, si bien qu'il peut être stocké dans la zone de mémoire (12A3) accessible de l'extérieur notamment dans le cas d'un algorithme à clé publique où seule la clé de déchiffrement doit rester secrète.

Il est important que le chiffrement se fasse à l'intérieur de la carte et non dans le terminal où il n'est pas possible de garantir à cent pour cent le secret des informations telles que la clé de chiffrement/déchiffrement. En effet, selon l'invention, le terminal qui doit être accessible au public est parfaitement banalisé puisqu'il ne renferme en lui-même aucune information confidentielle.

Enfin, dans un mode de réalisation simplifié de l'invention, la clé de chiffrement/déchiffrement peut tout simplement être constituée par le code secret (S). Dans un mode de réalisation plus complexe, l'algorithme de chiffrement peut prendre en compte une clé de chiffrement (KC) secrète différente ou non du code secret (S) et une clé secrète complémentaire (IS) préenregistrée dans la zone de mémoire (12A2). Cette clé (IS) n'est accessible par le microprocesseur seul que si un code d'identification (IN) frappé au clavier (21) du terminal (2) est identique au code d'identification (IN) préenregistré dans la zone de mémoire (12A1) de la carte (1).

**Revendications pour Etats contractants:**
**DE, GB, FR**

1. Procédé pour traiter des informations sur une piste d'enregistrement à lecture optique (13) d'un support portatif (1) tel qu'une carte, consistant pour sauvegarder la confidentialité des informations à enregistrer sur la piste:

– à utiliser une piste d'enregistrement magnéto-optique (13) à écriture magnétique et un dispositif externe d'écriture magnétique (23),

– à transférer ces informations à l'intérieur d'une mémoire électronique (12B) du support portatif (1),

– à chiffrer ces informations à l'intérieur du support portatif (1) au moyen de circuits de traitement (11) et d'une clé de chiffrement secrète préenregistrée dans une zone de mémoire (12A1) inaccessible depuis l'extérieur du support portatif (1),

– à transférer les informations chiffrées au dispositif externe d'écriture (23) pour les écrire magnétiquement sur la piste d'enregistrement magnéto-optique (13) du support portatif (1),

2. Procédé pour traiter des informations sur une piste d'enregistrement à lecture optique (13) d'un support portatif (1) tel qu'une carte, consistant pour exploiter des informations chiffrées stockées par un dispositif externe d'écriture magnétique (23) sur la piste d'enregistrement à lecture optique (13) du support portatif (1):

– à utiliser une piste d'enregistrement (13) magnéto-optique à écriture magnétique,

– à lire optiquement ces informations par un dispositif externe de lecture (23),

– à transférer ces informations à l'intérieur de la mémoire (12B) du support portatif (1),

– à déchiffrer ces informations à l'intérieur du support portatif (1) au moyen de circuits de traitement (11) et d'une clé de déchiffrement secrète préenregistrée dans une zone de mémoire (12A1) inaccessible depuis l'extérieur du support portatif (1), et

– à rendre accessible à l'extérieur du support portatif (1) les informations déchiffrées.

3. Procédé selon la revendication 1 ou 2, caractérisé en ce qu'il consiste à utiliser un dispositif externe d'écriture magnétique (23) à laser.

4. Procédé selon la revendication 1 ou 2, caractérisé en ce qu'il consiste à utiliser un dispositif externe d'écriture magnétique (23) par exemple à enregistrement perpendiculaire.

5. Système pour traiter des informations sur une piste d'enregistrement à lecture optique (13) d'un support portatif (1) tel qu'une carte, du type comprenant un terminal de traitement (2) auquel est temporairement accouplé le support (1), dans lequel la piste à lecture optique (13) est une piste magnéto-optique à écriture magnétique, le support (1) comprend au moins une mémoire électronique (12) dont au moins une zone de mémoire (12A1) est inaccessible depuis l'extérieur du support portatif (1) et où est au moins enregistrée une clé de chiffrement/déchiffrement secrète, des circuits de traitement (11) tels qu'un microprocesseur pour chiffrer avec ladite clé les informations à écrire sur la piste magnéto-optique (13) et pour déchiffrer avec ladite clé les informations enregistrées sur la piste magnéto-optique (13), et le terminal de traitement (2) comprend au moins un dispositif (23) de lecture optique des informations stockées sur la piste magnéto-optique (13), un dispositif (23) d'écriture magnétique d'informations sur la piste magnéto-optique (13) et un dispositif de transfert d'informations (22) entre la piste magnéto-optique (13) et les circuits de traitement (11) du support (1).

6. Système selon la revendication 5, caractérisé en ce que le dispositif d'écriture (23) est un dispositif magnétique par laser.

7. Système selon la revendication 5, caractérisé en ce que le dispositif d'écriture (23) est un dispositif à enregistrement perpendiculaire.

**Revendications pour Etats contractants: IT, NL, SE**

1. Procédé pour traiter des informations sur une piste d'enregistrement à lecture optique (13) d'un support portatif (1) tel qu'une carte, accouplé à un dispositif externe (23) d'écriture/lecture, caractérisé en ce qu'il consiste, pour sauvegarder la confidentialité des informations à enregistrer sur la piste (13):
- à transférer ces informations à l'intérieur d'une mémoire électronique (12B) du support portatif (1),
- à chiffrer ces informations à l'intérieur du support portatif (1) au moyen de circuits de traitement (11) et d'une clé de chiffrement secrète préenregistrée dans une zone de mémoire (12A1) inaccessible depuis l'extérieur du support portatif (1),
- à transférer les informations chiffrées au dispositif externe d'écriture/lecture (23) pour les écrire sur la piste d'enregistrement à lecture optique (13) du support portatif (1).

2. Procédé pour traiter des informations sur une piste d'enregistrement à lecture optique (13) d'un support portatif (1) tel qu'une carte, accouplé à un dispositif externe (23) d'écriture/lecture, caractérisé en ce qu'il consiste, pour exploiter les informations chiffrées stockées sur la piste d'enregistrement à lecture optique (13) du support portatif (1):
- à lire optiquement ces informations par le dispositif externe de lecture (23),
- à transférer ces informations à l'intérieur de la mémoire (12B) du support portatif (1),
- à déchiffrer ces informations à l'intérieur du support portatif (1) au moyen des circuits de traitements (11) et d'un clé de déchiffrement secrète préenregistrée dans la zone de mémoire (12A1) inaccessible depuis l'extérieur du support portatif (1), et
- à rendre accessible à l'extérieur du support portatif (1) les informations déchiffrées.

3. Procédé selon la revendication 1 ou 2, caractérisé en ce qu'il consiste à utiliser un dispositif externe (23) d'écriture magnétique à laser.

4. Procédé selon la revendication 1 ou 2, caractérisé en ce qu'il consiste à utiliser un dispositif externe (23) d'écriture magnétique par exemple à enregistrement perpendiculaire.

5. Système pour traiter des informations sur une piste d'enregistrement à lecture optique (13) d'un support portatif (1) tel qu'une carte, du type comprenant un terminal de traitement (2) auquel est temporairement accouplé le support (1), le terminal de traitement (2) comprenant au moins un dispositif (23) de lecture optique des informations stockées sur la piste optique (13) et un dispositif (23) d'écriture d'informations sur la piste optique (13), caractérisé en ce que le support (1) comprend au moins une mémoire électronique (12) dont au moins une zone de mémoire (12A1) est inaccessible depuis l'extérieur du support portatif (1) et où est au moins enregistrée une clé de chiffrement/déchiffrement secrète, des circuits de traitement (11) tels qu'un microprocesseur pour chiffrer avec ladite clé les informations à écrire sur la piste optique (13) et pour déchiffrer avec ladite clé les informations enregistrées sur la piste optique (13), et en ce que le terminal comprend un dispositif de transfert d'informations (22) entre la piste optique (13) et les circuits de traitement (11) du support (1).

6. Système selon la revendication 5, caractérisé en ce que le dispositif d'écriture (23) est un dispositif optique à laser.

7. Système selon la revendication 5, caractérisé en ce que la piste à lecture optique (13) est une piste magnéto-optique.

8. Système selon la revendication 5 ou 7, caractérisé en ce que le dispositif d'écriture (23) est un dispositif magnétique par laser.

9. Système selon la revendication 5 ou 7, caractérisé en ce que le dispositif d'écriture (23) est un dispositif magnétique à enregistrement perpendiculaire.

**Claims for the contracting States: DE, GB, FR**

1. A method of processing information on an optically readable recording track (13) of a portable carrier (1) such as a card, consisting in order to safeguard the confidentiality of the information to be recorded on the track:
- in using a magnetically writable magneto-optical recording track (13) and Ian external magnetic writing device (23),
- in transferring this information to the interior of an electronic memory (12B) of the portable carrier,
- in encoding this information in the interior of the portable carrier (1) by means of processing circuits (11) and of a secret encoding key prerecorded in a memory zone (12A1) which is inaccessible from the outside of the portable carrier (11).
- in transferring the encoded information to the external writing device (23) in order to write them magnetically on the magneto-optical recording track (13) of the portable carrier (1).

2. A method for processing information on an optically readable recording track (13) of a portable carrier (1) such as a card, consisting, in order to use encoded information stored by an external magnetic writing device (23) on the optically readable recording track (13) of the portable carrier (1):
- in using a magnetically writable magneto-optical recording track (13),
- in reading this information optically by means of an external reading device (23),

- in transferring this information to the interior of the memory (12B) of the portable carrier (1),
- in decoding this information within the portable carrier (1) by means of processing circuits (11) and of a secret decoding key prerecorded in a memory zone (12A1) which is inaccessible from the outside of the portable carrier (1), and
- in making the decoded information accessible to the exterior of the portable carrier (1).

3. A method according to claim 1 or 2, characterised in that it consists in using an external magnetic writing device (23) by laser.

4. A method according to claim 1 or 2, characterised in that it consists in using an external magnetic writing device (23) for example having perpendicular recording.

5. A system for processing information on an optically readable recording track (13) of a portable carrier (1) such as a card, of the type comprising a processing terminal (2) with which the carrier (1) is temporarily coupled, in which the optically readable track (13) is a magnetically writable magneto-optical track, the carrier (1) comprises at least one electronic memory (12) of which at least one memory zone (12A1) is inaccessible from the exterior of the portable carrier (1) and where there is at least recorded a secret coding/decoding key, processing circuits (11) such as a microprocessor for encoding with the said key the information to be written on the magneto-optical track (13) and for decoding with the said key information recorded on the magneto-optical track (13), and the processing terminal (2) comprises at least one device (23) for optically reading the information stored on the magneto-optical track (13), a device (23) for magnetically writing information on the magneto-optical track (13) and a device for transferring information between the magneto-optical track (13) and the processing circuits (11) of the carrier (1).

6. A system according to claim 5, characterised in that the write device (23) is a magnetic device by laser.

7. A system according to claim 5, characterised in that the write device (23) is a device having perpendicular recording.

**Claims for contracting States: IT, NL, SE**

1. A method for processing information on an optically-readable recording track (13) of a portable carrier (1) such as a card, coupled to an external write/read device (23), characterised in that it consists, in order to safeguard the confidentiality of the information to be recorded on the track:
- in transferring this information to the interior of an electronic memory (12B) of a portable carrier (1),
- in encoding this information within the portable carrier (1) by means of processing circuits (11) and of a secret encoding key prerecorded in a memory zone (12A1) which is inaccessible from the outside of the portable carrier (1),
- in transferring the encoded information to the external write/read device (23) in order to write it on the optically readable recording track (13) of the portable carrier (1).

2. A method for processing information on an optically readable recording track (13) of a portable carrier (1) such as a card, coupled to an external write/read device (23), characterised in that it consists, in order to use the encoded information stored on the optically readable recording track (13) of the portable carrier (1):
- in reading this information optically by means of the external read device (23),
- in transferring this information to the interior of the memory (12B) of the portable carrier (1),
- in decoding this information in the interior of the portable carrier (1) by means of the processing circuits (11) and of a secret decoding key prerecorded in the memory zone (12A1) which is inaccessible from the outside of the portable carrier, and
- in making the decoded information accessible to the exterior of the portable carrier (1).

3. A method according to claim 1 or 2, characterised in that it consists in using an external magnetic writing device (23) by laser.

4. A method according to claim 1 or 2, characterised in that it consists in using an external magnetic writing device (23) for example having perpendicular recording.

5. A system for processing information on an optically readable recording track (13) of a portable carrier (1) such as a card, of the type comprising a processing terminal (2) with which the carrier (1) is temporarily coupled, the processing terminal (2) comprising at least one device (23) for optically reading the information stored on the optical track (13) and a device (23) for writing information on the optical track (13) characterised in that the carrier (1) comprises at least one electronic memory (12) of which at least one memory zone (12A1) is inaccessible from the exterior of the portable carrier (1) and where there is at least recorded a secret encoding/decoding key, processing circuits (11) such as a microprocessor for encoding with the said key the information to be written on the optical track (13) and for decoding with the said key the information recorded on the optical track (13), and in that the terminal comprises a device (22) for transferring information between the optical track (13) and the processing circuits (11) of the carrier (1).

6. A system according to claim 5, characterised in that the write device (23) is an optical laser device.

7. A system according to claim 5, characterised in that the optically readable track (13) is a magneto-optical track.

8. A system according to claim 5 or 7, characterised in that the write device (23) is a magnetic device by laser.

9. A system according to claim 5 or 7, characterised in that the write device (23) is a magnetic device having perpendicular recording.

**Patentansprüche für die Vertragsstaaten:
DE, GB, FR**

1. Verfahren zur Verarbeitung der Informationen auf einer optisch auslesbaren Aufzeichnungsspur (13) eines tragbaren Trägers (1) wie eine Karte, wobei es zur Wahrung der Vertraulichkeit der auf der Spur aufzuzeichnenden Informationen darin besteht:

   — eine opto-magnetische Aufzeichnungsspur (13) zum magnetischen Aufschreiben und eine äussere magnetische Aufschreibevorrichtung (23) zu verwenden,

   — diese Informationen in einen elektronischen Speicher (12B) des tragbaren Trägers (1) zu überführen,

   — diese Informationen innerhalb des tragbaren Trägers (1) zu kodieren, mittels Verarbeitungskreisen (11) und eines geheimen Kodierschlüssels, der zuvor in einer der Aussenseite des tragbaren Trägers (1) aus unzugänglichen Speicherzone (12A1) aufgezeichnet worden ist,

   — die kodierten Informationen zu der äusseren Aufschreibevorrichtung (23) zu überführen, um sie auf der opto-magnetischen Aufzeichnungsspur (13) des tragbaren Trägers (1) magnetisch aufzuschreiben.

2. Verfahren zur Verarbeitung der Informationen auf einer optisch auslesbaren Aufzeichnungsspur (13) eines tragbaren Trägers (1) wie eine Karte, wobei es darin besteht, um kodierte Informationen, die durch eine äussere magnetische Aufschreibevorrichtung (23) auf der optisch auslesbaren Aufzeichnungsspur (13) des tragbaren Trägers (1) gespeichert worden sind:

   — eine opto-magnetische Aufzeichnungsspur (13) zum magnetischen Aufschreiben zu verwenden,

   — diese Informationen von einer äusseren Lesevorrichtung (23) optisch lesen zu lassen,

   — diese Informationen in den Speicher (12B) des tragbaren Trägers (1) zu überführen,

   — diese Informationen innerhalb des tragbaren Trägers (1) mittels Verarbeitungskreisen (11) und eines geheimen Dekodierschlüssels zu dekodieren, der zuvor in der von der Aussenseite des tragbaren Trägers (1) aus unzugänglichen Speicherzone (12A1) aufgezeichnet worden ist, und

   — die dekodierten Informationen ausserhalb des tragbaren Trägers (1) zugänglich zu machen.

3. Verfahren nach dem Anspruch 1 oder 2, dadurch gekennzeichnet, dass es darin besteht, eine externe Vorrichtung (23) zum magnetischen Aufschreiben mit Laser zu verwenden.

4. Verfahren nach dem Anspruch 1 oder 2, dadurch gekennzeichnet, dass es darin besteht, eine externe Vorrichtung (23) zum magnetischen Aufschreiben, z.B. mit senkrechter Aufzeichnung, zu verwenden.

5. System zur Verarbeitung der Informationen auf einer optisch auslesbaren Aufzeichnungsspur (13) eines tragbaren Trägers (1) wie eine Karte, vom Typ mit einem Verarbeitungsterminal (2), an welches der Träger (1) vorübergehend angekoppelt ist, worin die optisch auslesbare Aufzeichnungsspur (13) eine opto-magnetische Spur zum magnetischen Aufschreiben ist, der Träger (1) wenigstens einen elektronischen Speicher (12) umfasst, wovon wenigstens eine Speicherzone (12A1) vom Äusseren des tragbaren Trägers (1) aus unzugänglich ist, und worin wenigstens ein geheimer Schlüssel zur Kodierung/Dekodierung aufgezeichnet ist, sowie Verarbeitungskreise (11) wie einen Mikroprozessor umfasst, um über den genannten Schlüssel die auf der opto-magnetischen Spur (13) aufzuschreibenden Informationen zu kodieren und die auf der opto-magnetischen Spur (13) gespeicherten Informationen zu dekodieren, und das Verarbeitungsterminal (2) wenigstens eine Vorrichtung (23) zum optischen Auslesen der auf der opto-magnetischen Spur (13) gespeicherten Informationen, eine Vorrichtung (23) zum magnetischen Aufschreiben auf der opto-magnetischen Spur (13), sowie eine Vorrichtung (22) zur Überführung von Informationen zwischen der opto-magnetischen Spur (13) und den Verarbeitungskreisen (11) des Trägers (1) umfasst.

6. System nach Anspruch 5, dadurch gekennzeichnet, dass die Aufschreibevorrichtung (23) eine magnetische Vorrichtung mit Laser ist.

7. System nach Anspruch 5, dadurch gekennzeichnet, dass die Aufschreibevorrichtung (23) eine Vorrichtung mit senkrechter Aufzeichnung ist.

**Patentansprüche für die Vertragsstaaten:
IT, NL, SE**

1. Verfahren zur Verarbeitung der Informationen auf einer optisch auslesbaren Aufzeichnungsspur (13) eines tragbaren Trägers (1) wie eine Karte, der an eine äussere Lese/Schreib-Vorrichtung (23) angekoppelt ist, dadurch gekennzeichnet, dass es zur Wahrung der Vertraulichkeit der auf der Spur (13) aufzuzeichnenden Informationen darin besteht:

   — diese Informationen in einen elektronischen Speicher (12B) des tragbaren Trägers (1) zu überführen:

   — diese Informationen innerhalb des tragbaren Trägers (1) zu kodieren, mittels Verarbeitungskreisen (11) und eines geheimen Kodierschlüssels, der zuvor in einer von der Aussenseite des tragbaren Trägers (1) aus unzugänglichen Speicherzone (12A1) aufgezeichnet worden ist,

   — die kodierten Informationen zu der äusseren Lese/Schreib-Vorrichtung (23) zu überführen, um sie auf der optisch auslesbaren Aufzeichnungsspur (13) des tragbaren Trägers (1) aufzuschreiben.

2. Verfahren zur Verarbeitung der Informationen auf einer optisch auslesbasen Aufzeichnungsspur (13) eines tragbaren Trägers (1) wie eine Karte, der an eine äussere Lese/Schreib-Vorrichtung (23) angekoppelt ist, dadurch gekennzeichnet, dass es darin besteht, zur Bearbeitung der kodierten Informationen, welche auf der optisch auslesbaren Aufzeichnungsspur (13) des tragbaren Trägers (1) gespeichert sind,

   — diese Informationen von der äusseren Lesevorrichtung (23) optisch lesen zu lassen,

– diese Informationen in den Speicher (12B) des tragbaren Trägers (1) zu überführen,

– diese Informationen innerhalb des tragbaren Trägers (1) mittels Verarbeitungskreisen (11) und eines geheimen Dekodierschlüssels zu dekodieren, der zuvor in der von der Aussenseite des tragbaren Trägers (1) aus unzugänglichen Speicherzone (12A1) aufgezeichnet worden ist,

– diese dekodierten Informationen ausserhalb des tragbaren Trägers (1) zugänglich zu machen.

3. Verfahren nach dem Anspruch 1 oder 2, dadurch gekennzeichnet, dass es darin besteht, eine externe Vorrichtung (23) zum magnetischen Aufschreiben mit Laser zu verwenden.

4. Verfahren nach dem Anspruch 1 oder 2, dadurch gekennzeichnet, dass es darin besteht, eine externe Vorrichtung (23) zum magnetischen Aufschreiben, z.B. mit senkrechter Aufzeichnung, zu verwenden.

5. System zur Verarbeitung der Informationen auf einer optisch auslesbaren Aufzeichnungsspur (13) eines tragbaren Trägers (1) wie eine Karte, vom Typ mit einem Verarbeitungsterminal (2), an welches der Träger (1) vorübergehend angekoppelt ist, wobei das Verarbeitungsterminal (2) wenigstens eine Vorrichtung (23) zum optischen Auslesen der auf der optischen Spur (13) gespeicherten Informationen sowie eine Vorrichtung (23) zum Aufschreiben der Informationen auf der optischen Spur (13) umfasst, dadurch gekennzeichnet, dass der Träger (1) wenigstens einen elektronischen Speicher (12) umfasst, wovon wenigstens eine Speicherzone (12A1) vom Äusseren des tragbaren Trägers (1) aus unzugänglich ist, worin wenigstens ein geheimer Schlüssel zur Kodierung/ Dekodierung aufgezeichnet ist, sowie Verarbeitungskreise (11) wie einen Mikroprozessor umfasst, um über den genannten Schlüssel die auf der optischen Spur (13) aufzuschreibenden Informationen zu kodieren und die auf der optischen Spur (13) gespeicherten Informationen zu dekodieren, und dass das Terminal eine Vorrichtung zur Überführung der Informationen (22) zwischen der optischen Spur (13) und den Verarbeitungskreisen (11) des Trägers (1) umfasst.

6. System nach Anspruch 5, dadurch gekennzeichnet, dass die Aufschreibevorrichtung (23) eine optische Vorrichtung mit Laser ist.

7. System nach Anspruch 5, dadurch gekennzeichnet, dass die optisch auslesbare Spur (13) eine opto-magnetische Spur ist.

8. System nach dem Anspruch 5 oder 7, dadurch gekennzeichnet, dass die Aufschreibevorrichtung (23) eine magnetische Laservorrichtung ist.

9. System nach dem Anspruch 5 oder 7, dadurch gekennzeichnet, dass die Aufschreibevorrichtung (23) eine magnetische Vorrichtung mit senkrechter Aufzeichnung ist.